Europäisches Patentamt

European Patent Office

Office européen des brevets

(11) Veröffentlichungsnummer: **0 093 240**
**A2**

(12) # EUROPÄISCHE PATENTANMELDUNG

(21) Anmeldenummer: 83101604.3

(22) Anmeldetag: 19.02.83

(51) Int. Cl.³: **B 60 R 21/10**

(30) Priorität: 29.04.82 DE 3215927

(43) Veröffentlichungstag der Anmeldung:
09.11.83 Patentblatt 83/45

(84) Benannte Vertragsstaaten:
FR GB IT SE

(71) Anmelder: Bayern-Chemie Gesellschaft für
flugchemische Antriebe mit beschränkter Haftung

D-8261 Aschau a. Inn(DE)

(72) Erfinder: Nilsson, Karl-Erik
Johann-Sebastian-Bach-Strasse 56
D-8012 Ottobrunn(DE)

(74) Vertreter: Frick, Gerhard
Harthausener Strasse 18 Ortsteil Neukeferloh
D-8011 Grasbrunn(DE)

(54) Aufwickelvorrichtung für Sicherheitsgurte.

(57) Eine Aufwickelvorrichtung für Sicherheitsgurte weist einen Gurtaufrollautomaten (26) und einen Rückstrammer (1) auf. Der Rückstrammer (1) besteht aus einem Drehkolbenmotor mit einer Antriebsscheibe (23). An der Antriebsscheibe (23) ist ein Kraftübertragungselement, beispielsweise ein Draht (24) befestigt, der um eine Scheibe (39) gewickelt ist, die über eine Mitnehmerkupplung mit der Aufrollerwelle (28) des Gurtaufrollautomaten (26) kuppelbar ist.

Fig.4

0093240

BAYERN - CHEMIE
Gesellschaft für flugchemische Antriebe mit
beschränkter Haftung
A s c h a u

Ottobrunn, 26.o4.82
9192
BTo1 Dr.Be/ch

## Aufwickelvorrichtung für Sicherheitsgurte

Die Erfindung bezieht sich auf eine Aufwickelvorrichtung für Sicherheitsgurte in Fahrzeugen, mit einem Gurtaufrollautomaten und einem Rückstrammer, der einen durch einen pyrotechnischen Treibsatz antreibbaren nach dem Drehkolbenprinzip arbeitenden Rotationsantriebsmotor mit mindestens einer über eine Mitnehmerkupplung mit der Gurtbandspule des Gurtaufrollautomaten kuppelbaren Antriebsscheibe aufweist.

Rückstrammer dienen dazu, eine Gurtlose beim Fahrzeugaufprall durch Rückziehen des Gurtes zu beseitigen, damit der freie Vorfallweg bis zum Wirksamwerden des Gurtes möglichst gering ist.

Eine Aufwickelvorrichtung mit einem Rückstrammer soll dabei insbesondere drei Anforderungen erfüllen. Erstens soll der Rückstrammer eine genügend große Gurtlose (beispielsweise 20 cm) beseitigen können, zweitens soll er in dem geringen zur Verfügung stehenden Platz in Kraftfahrzeugen untergebracht werden können und drittens soll er ohne, jedenfalls nur mit minimalen Änderungen nachträglich an den vorhandenen, serienmäßigen Gurtaufrollautomaten angebracht werden können.

Eine Gurtaufwickelvorrichtung der vorstehend angegebenen Art ist bereits bekannt (DE-AS 25 10 514). Der Drehkolbenmotor ist dabei aus zwei in ihren Umrissen durch eine Welle, einen Mantel, einen vorderen und einen hinteren Deckel begrenzten und durch eine zwischen der Welle und dem Mantel vorgesehene Ringscheibe voneinander getrennten Ringkammern sowie aus je zwei jeweils die volle Umdrehungsfläche der Ringkammern einnehmenden Flügel gebildet, wobei in beiden Ringkammern je ein Flügel (erster Flügel, zweiter Flügel) fest mit der Welle und der Ringscheibe und in der vorderen Ringkammer der dritte Flügel fest mit dem vorderen Deckel und in der hinteren Ringkammer der vierte Flügel fest mit dem hinteren Deckel und dieser mit dem Mantel verbunden sind. Die von dem Treibsatz erzeugten Treibgase gelangen durch Bohrungen in der Welle in die beiden Ringkammern, wobei in der vorderen Ringkammer der erste Flügel und in der hinteren Ringkammer der vierte Flügel beaufschlagbar und unabhängig voneinander und zusammen mit dem mit ihnen verbundenen Teilen so lange drehbar sind, bis der erste Flügel am dritten Flügel und der vierte Flügel am zweiten Flügel anstoßen.

Statt einer Drehung der Gurtbandspule um ca. 300°, die ein lediglich mit einem Drehkolben und einer Drehzylinderkammer versehener Drehkolbenmotor hervorbringt, wie er beispielsweise aus der DE-AS 22 62 889 bekannt ist, wird dadurch bei der Gurtaufwickelvorrichtung nach der DE-AS 25 10 514 eine Drehung der Gurtbandspule um ca. 600° erzielt. Das heißt, mit der Gurtaufwickelvorrichtung nach der DE-AS 25 10 514 kann zwar eine größere Gurtlose beseitigt werden, jedoch ist dafür ein relativ komplizierter Drehkolbenmotor erforderlich.

Weiterhin ist bei der Gurtaufwickelvorrichtung nach der DE-AS 25 10 514 die Gurtbandspule auf einem an dem Drehkolbenmotor befestigten Zapfen sowie einem im Gurtaufrollautomatengehäuse montierten Zapfen drehbar angeordnet. Die den Drehkolbenmotor zugewandte Seitenscheibe der Gurtbandspule ist ferner als Klinkenrad ausgebildet, das mit einer Klinkeneinrichtung zur Blockierung des Gurtaufrollautomaten zusammenwirkt, und mit einer Vielzahl umfangsmäßiger Bohrungen versehen, in die zur Kupplung der Antriebsscheibe des Drehkolbenmotors mit der Gurtbandspule ein durch Treibgase des Treibsatzes beaufschlagbarer Bolzen einschiebbar ist. Dadurch wird zwar die bekannte Gurtaufwickelvorrichtung gegenüber einem herkömmlichen Gurtaufrollautomaten in axialer Richtung im wesentlichen nur um die Breite des Drehkolbenmotors vergrößert, jedoch ist aufgrund der zahlreichen Unterschiede gegenüber den vorhandenen, serienmäßigen Gurtaufrollautomaten eine nachträgliche Anbringung des Gurtstrammers an dieselben nicht möglich.

Der Erfindung, wie sie in den Ansprüchen gekennzeichnet ist, liegt die Aufgabe zugrunde, die bekannte Aufwickelvorrichtung so zu verbessern, daß der Rückstrammer an die vorhandenen gängigen Gurtaufrollautomaten angebracht werden kann und trotzdem eine ausreichende Beseitigung der Gurtlose sowie ein zumindest ebenso kompakter Aufbau der Aufwickelvorrichtung gewährleistet ist.

Bei den Ausführungsformen nach Anspruch 2 bis 6 der erfindungsgemäßen Aufwickelvorrichtung wird eine ausreichende Beseitigung der Gurtlose dadurch erreicht, daß die große Energie, die dem Drehkolben des Drehkolbenmotors beim Zünden des Treibsatzes erteilt wird, bis er zu seiner Endstellung gelangt, die Kupplungsscheibe der Mitnehmerkupplung sowie die Aufrollerwelle und die übrigen rotierenden Massen des Gurtaufrollautomaten in Schwung bringt, so daß sich die Aufrollerwelle, nachdem der Drehkolben des Drehkolbenmotors seine Endstellung erreicht hat, noch weiter dreht, also insgesamt der Drehwinkel der Aufrollerwelle größer ist als der Drehwinkel des Drehkolbens.

Bei den Ausführungsformen nach Anspruch 7 bis 14 der erfindungsgemäßen Aufwickelvorrichtung kann ein genügend großer Drehwinkel der Aufrollerwelle insbesondere durch

eine entsprechende Übersetzung zwischen der Antriebsscheibe des Drehkolbenmotors und der Kupplungsscheibe der
Mitnehmerkupplung erreicht werden.

Nachstehend sind verschiedene Ausführungsformen der erfindungsgemäßen Gurtaufwickelvorrichtung anhand der beigefügten Zeichnung näher erläutert. Darin zeigen:

Figur 1 und 2      einen Längs - bzw. Querschnitt durch eine
bevorzugte Ausführungsform eines Rückstrammers der Aufwickelvorrichtung;

Figur 3 und 4      eine Seiten- bzw. Vorderansicht einer
ersten Ausführungsform der Aufwickelvorrichtung;

Figur 5 und 6      eine Seiten- bzw. Vorderansicht einer
zweiten Ausführungsform der Aufwickelvorrichtung;

Figur 7 und 8      eine Seiten- bzw. Vorderansicht einer
dritten Ausführungsform der Aufwickelvorrichtung;

Figur 9 und 10      eine Seiten- bzw. Vorderansicht einer
vierten Ausführungsform der Aufwickelvorrichtung;

Figur 11 und 12      eine Seiten- bzw. Vorderansicht einer
fünften Ausführungsform der Aufwickelvorrichtung;

Figur 13 und 14      eine Seiten- bzw. Vorderansicht einer
sechsten Ausführungsform der Aufwickelvorrichtung.

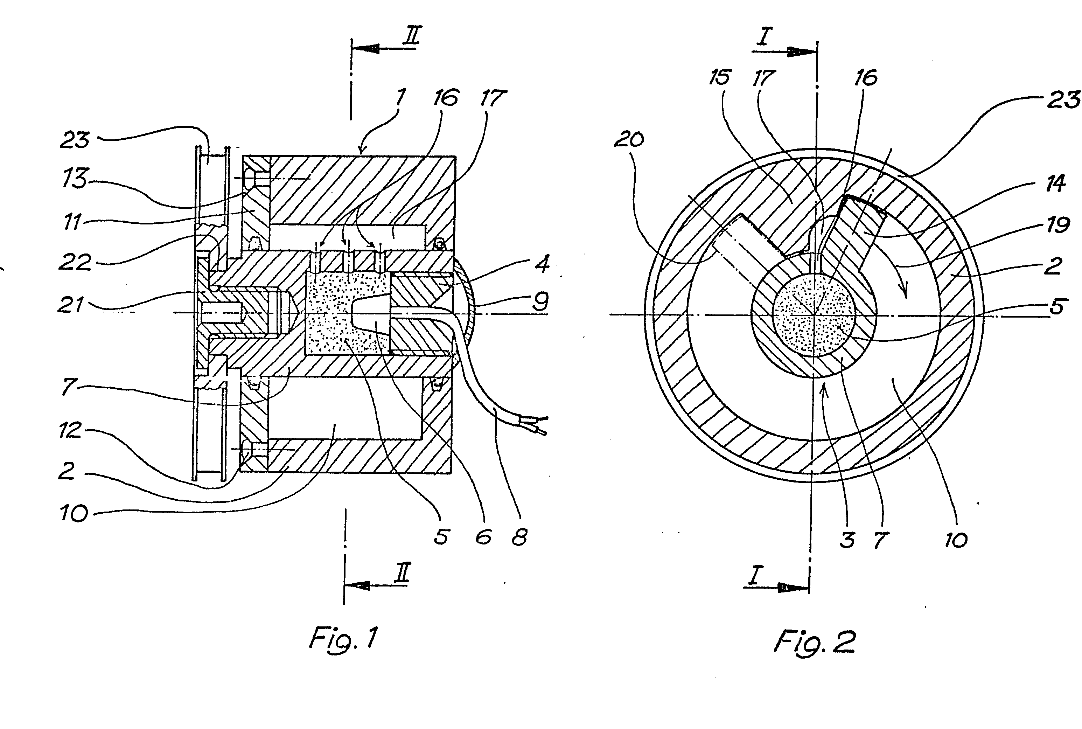

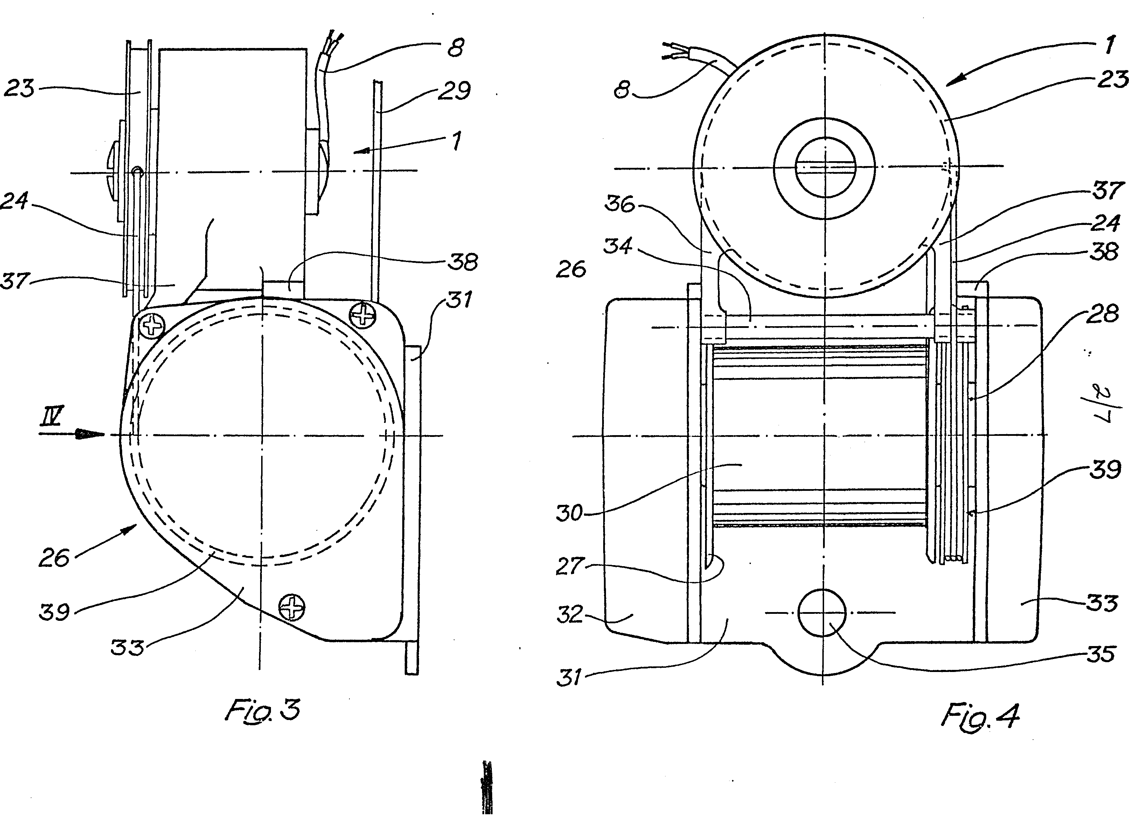

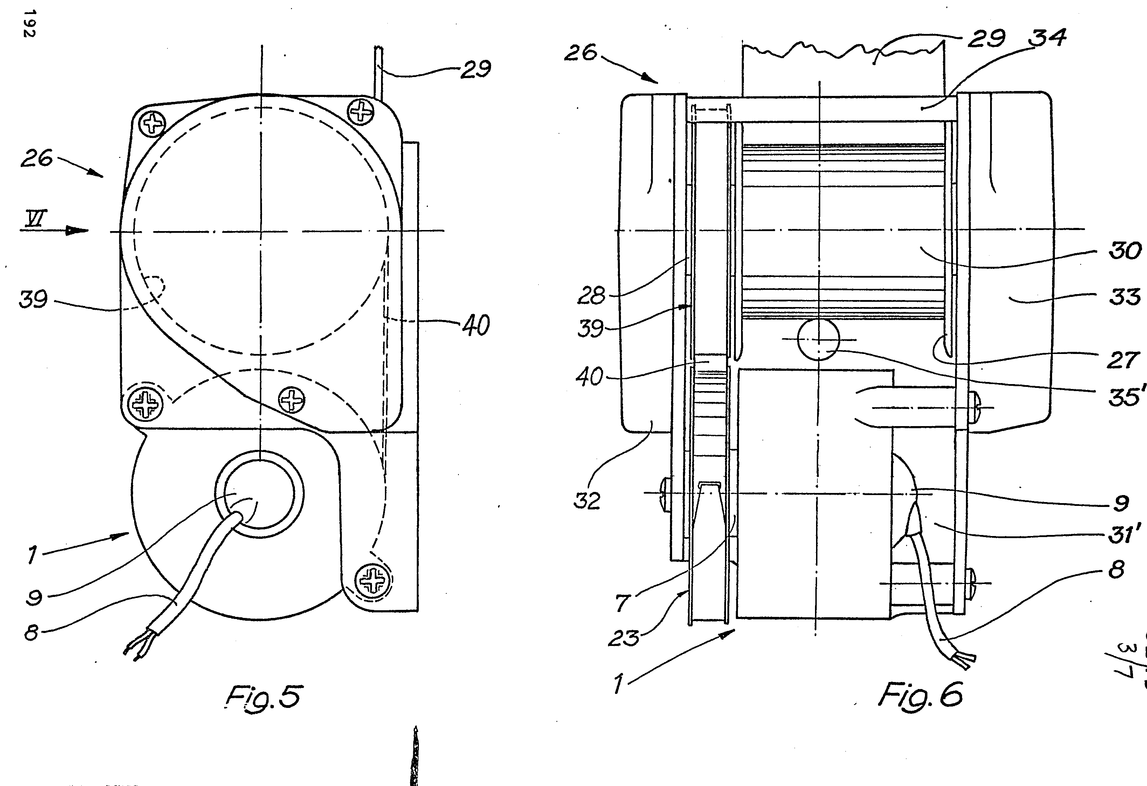

Gemäß Figur 1 und 2 besteht der Rückstrammer 1 im wesentlichen aus einem Drehzylinder 2, der vorzugsweise als Druckgußteil ausgebildet ist, und einem darin drehbar gelagerten Drehkolben 3, der als Einflügeldrehkolben ausgebildet ist.

Abgedichtet über einen Verschluß 4 befindet sich ein Treibsatz 5 und ein Zünder 6 in der Welle 7 des Drehkolbens 3. Ein Zündkabel 8 führt durch den Verschluß 4 und eine darauf angeordnete Abdeckkappe 9 vom Zünder 6 nach außen. Der Drehzylinderraum 10 wird auf der dem Verschluß 4 gegenüberliegenden Stirnseite durch einen Deckel 11 abgeschlossen. Die Verbindung des Deckels 11 mit dem Drehzylinder 2 wird vorteilhafterweise durch Vernieten der einteilig mit dem Drehzylinder 2 verbunden Stifte 12 in den dafür vorgesehenen Senkbohrungen 13 erreicht. Der Flügel 14 des Einflügeldrehkolbens 3 liegt an dem durch einen Widerlagernocken 15 gebildeten Drehzylinderboden an.

Neben dem Flügel 14 des Drehkolbens 3 erstrecken sich Bohrungen 16 von dem Treibsatz 5 durch die Welle 6 in die Expansionskammer 17 des Drehzylinderraumes 10.

Nach erfolgter Zündung des Treibsatzes 5 gelangen somit die Treibgase über die Bohrungen 16 in der Welle 7 in die von dem Flügel 14 und dem Widerlagennocken 15 eingeschlossene Expansionskammer 17 und dehnen sich aus. Dabei wird der Flügel 14 des Drehkolbens 3 in Richtung des Pfeiles 19 in Figur 2 in Rotation versetzt. Er dreht sich um ca. 270° bis er an der gegenüberliegenden Seite des Widerlagernockens 15 anschlägt, d.h. die strich-punktiert dargestellte Endstellung 20 erreicht.

Die mit einer Befestigungsschraube 21 über einen Formschluß 22 mit der Welle 7 des Drehkolbens 3 verbundene Antriebsscheibe 23 wird dabei gedreht. Ein an der Antriebsscheibe 23 mit einem Ende befestigtes Zugmittel als

Kraftübertragungselement (z.B. ein Seil, ein Draht, eine Litze, Federbandstahl) wird damit auf die Antriebsscheibe 23 gewickelt, und zwar mit mindestens einer halben Umschlingung.

Bei der in Figur 3 und 4 dargestellten Ausführungsform der Aufwickelvorrichtung ist das Zugmittel durch einen Draht, ein Seil oder eine Litze 24 gebildet, d.h. es weist einen verhältnismäßig geringen Torsionswiderstand auf.

Bei der Ausführungsform nach Figur 3 und 4 ist der Rückstrammer 1 mit der Antriebsscheibe 23 oberhalb des Gurtaufrollautomaten 26 angebracht.

Bei dem Gurtaufrollautomaten 26 handelt es sich um einen der heutzutage gängigen Typen. Das heißt, auf einer Gurtbandspule 27 auf einer Welle 28 ist ein Gurtband 29 zu einem Wickel 30 aufgerollt. Die Aufrollerwelle 28 ist in einem Gehäuse 31 mit plattenförmiger Rückwand drehbar gelagert. Zum Abdecken des Blockiermechanismus sowie der Aufwickelfeder des Aufrollautomaten 26 ist beiderseits der Gurtbandspule 27 eine am Gehäuse 31 befestigte Abdeckkappe 32 bzw. 33 vorgesehen. Zwischen den Abdeckkappen 32 und 33 erstreckt sich oberhalb der Gurtbandspule 27 ein am Gehäuse 31 befestigte Distanzstange 34.

Mittels einer Schraube, die durch eine Bohrung 35 am unteren Ende der plattenförmigen Rückwand des Gehäuses 31 geführt ist, wird der Gurtaufrollautomat 26 z.B. am Innenblech der B-Säule eines Automobils befestigt. Das Gurtband 29 erstreckt sich dann vom Wickel 30 weg zunächst zwischen dem Innenblech und einer Verkleidung in der B-Säule.

Zur Befestigung des Gurtstrammers 1 an dem Aufrollautomaten 26 ist der Drehzylinder 2 mit drei Füßen 36, 37, 38 versehen. Die beiden vorderen Füße 36 und 37 sind dabei an der Distanzstange 34 befestigt, während sich der hintere, dem Gurtband 29 zugewandte Fuß 38 auf dem Gehäuse 31 des Aufrollautomaten 26 abstützt.

Der Draht 24 erstreckt sich von der Antriebsscheibe 23 zu einer Kupplungsscheibe 39, um die er etwa dreimal gewickelt ist. Zwischen der Kupplungsscheibe 39 und der Aufrollerwelle 28 ist eine Mitnehmerkupplung vorgesehen, die bewirkt, daß beim Aufwickeln des Drahtes 24 auf die Antriebsscheibe 23 und damit beim Abwickeln des Drahtes 24 von der Kupplungsscheibe 39 nach dem Zünden des Treibsatzes 5 die Kupplungsscheibe 39 mit der Aufrollerwelle 28 gekuppelt wird. Es kann praktisch jede beliebige bekannte Mitnehmerkupplung verwendet werden, so daß sich erübrigt, ihren Aufbau näher zu beschreiben.

Die Rotationsachse, d.h. die Welle 7 des Drehkolbenmotors verläuft bei der Ausführungsform nach Figur 3 und 4 rechtwinklig zur Rotationsachse, d.h. zur Aufrollerwelle 28 des Gurtaufrollautomaten 26 Die Antriebsscheibe 23 und die Kupplungsscheibe 39 sind dabei so zueinander angeordnet, daß der Draht 24 auf einer Geraden verläuft, die durch den Schnitt der beiden Ebenen gebildet wird, in denen die Antriebsscheibe 23 bzw. die Kupplungsscheibe 39 liegt.

Die in Figur 3 und 4 gezeigte Anordnung des Rückstrammers 1 ist deshalb besonders vorteilhaft, weil sie sehr platzsparend ist und dem Gurtband 29 ausreichend Freiraum gibt, wenn es sich beim Abspulen mit abnehmendem Durchmesser des Gurtwickels 30 radial nach innen bewegt. Die Breite der Aufwickelvorrichtung wird nur um die Integration der Kupplungsscheibe 39 vergrößert und in der Tiefe garnicht. Der Rückstrammer 1 baut also im wesentlichen nur in die Höhe, wo in der B-Säule eines Automobils normalerweise Platz vorhanden ist.

Die in Figur 3 und 4 gezeigte Ausführungsform der erfindungsgemäßen Gurtaufwickelvorrichtung funktioniert folgendermaßen:

Im Aktivierungsfall gelangt ein Zündimpuls von einem Sensor über das Zündkabel 8 zum Zünder 6 (Figur 1 und 2). Die auf der Welle 7 des Drehkolbens 3 formschlüssig befestigte Antriebsscheibe 23 wird bei Ausdehnung der Treibgase in der Expansionskammer 17 in Drehung versetzt und wickelt dabei den Draht 24 auf. Die Kupplungsscheibe 39 wird dabei in Drehung versetzt und durch die Mitnehmerkupplung nach wenigen Graden der Drehung mit der Aufrollerwelle 28 gekuppelt, so daß dieselbe mitgenommen wird. Die Aufrollerwelle 28 zieht dabei das Gurtband 29 ein. Dies ist der sogenannte Strammungsvorgang. Dabei dreht sich die Welle 7 des Drehkolbens 3 bis dessen Flügel 14 die Endstellung 20 erreicht, wodurch die Masse der Aufrollerwelle 28 sowie der mit ihr drehfest verbundenen Massen in Schwung gebracht wird.

Die in Figur 5 und 6 dargestellte Ausführungsform der erfindungsgemäßen Aufwickelvorrichtung unterscheidet sich von derjenigen nach Figur 3 und 4 im wesentlichen dadurch, daß die Rotationsachse des Rückstrammers 1, d.h. die Welle des Drehkolbens achsparallel zur Aufrollerwelle 28 angeordnet ist. Außerdem ist der Rückstrammer 1 unterhalb des Gurtaufrollautomaten 26 angebracht. Diese Anordnung kann unter Umständen bei entsprechenden Platzverhältnissen in einem Automobil erforderlich werden. Allerdings ist dabei ein spezielles Gehäuse 31' für den Gurtaufrollautomaten erforderlich.

Als Zugmittel für den Strammungsvorgang dient bei der Ausführungsform nach Figur 5 und 6 ein Federbandstahl 40, wie er auch als Aufwickelfeder für die Aufrollerwelle 28 in dem durch die Abdeckkappe 33 des Gehäuses 31' des Gurtaufrollautomaten 26 zum Einsatz kommt. Bei einer Abmessung von 0,25 x 8 mm hat der Federbandstahl 40 etwa die gleiche Bruchlast von ca. 4000 N wie ein Draht von 1,4 mm oder eine Litze von 1,6 mm Dicke. Aufgrund der dünnen Ausführung ist er aber deutlich biegeweicher (geringes Widerstandsmoment) als beispielsweise der Draht. Das bedingt einen geringen Verlustwiderstand während des Umspulvorgangs von der Kupplungsscheibe 39 auf die Antriebsscheibe 23.

Weiterhin ist im Gegensatz zur Ausführungsform nach Figur 3 und 4 bei der Ausführungsform nach Figur 5 und 6 die Antriebsscheibe 23 nicht fliegend, sondern beidseitig gelagert.

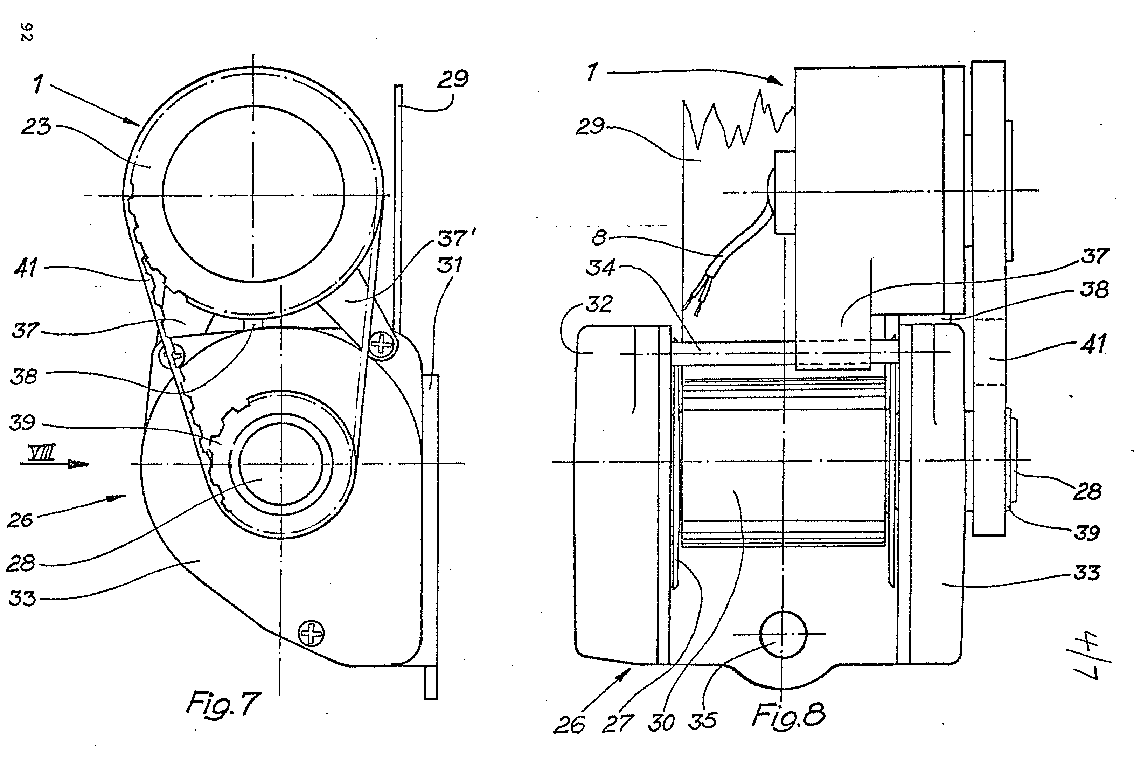

Bei der in Figur 7 und 8 dargestellten Ausführungsform der erfindungsgemäßen Gurtaufwickelvorrichtung ist der Rückstrammer 1 achsparallel zur Aufrollerwelle 28 oberhalb des Gurtaufrollautomaten 26 angeordnet. Als Kraftübertragungselement ist ein Zahnriemen 41 vorgesehen. Die Antriebsscheibe 23 und die Kupplungsscheibe 39 sind entsprechend verzahnt. Statt des Zahnriemens 41 könnte genauso gut eine Rollenkette oder ein Keilriemen zum Einsatz kommen.

Bei dieser Ausführungsform läßt sich mit einem geringeren Durchmesser der Kupplungsscheibe 39 gegenüber dem Durchmesser der Antriebsscheibe 23 eine Übersetzung erreichen. Dadurch wird der Drehwinkel der Gurtaufrollerwelle 28 bei Aktivierung des Rückstrammers 1 größer. Der Anteil der Drehbewegung aus dem Schwung der gespeicherten Drehenergie ist jedoch entsprechend geringer. Andererseits ist die Beanspruchung des Kraftübertragungselements, also des Zahnriemens 41, bei dieser Ausführungsform größer.

Bei der Ausführungsform nach Figur 7 und 8 ist weiterhin die Kupplungsscheibe 39 auf der von der Gurtbandspule 27 abgewandten Seite der Abdeckkappe 33 an der Aufrollerwelle 28 angebracht. Die Kupplungsscheibe 39 wird dabei von der Federabdeckkappe 33 fixiert.

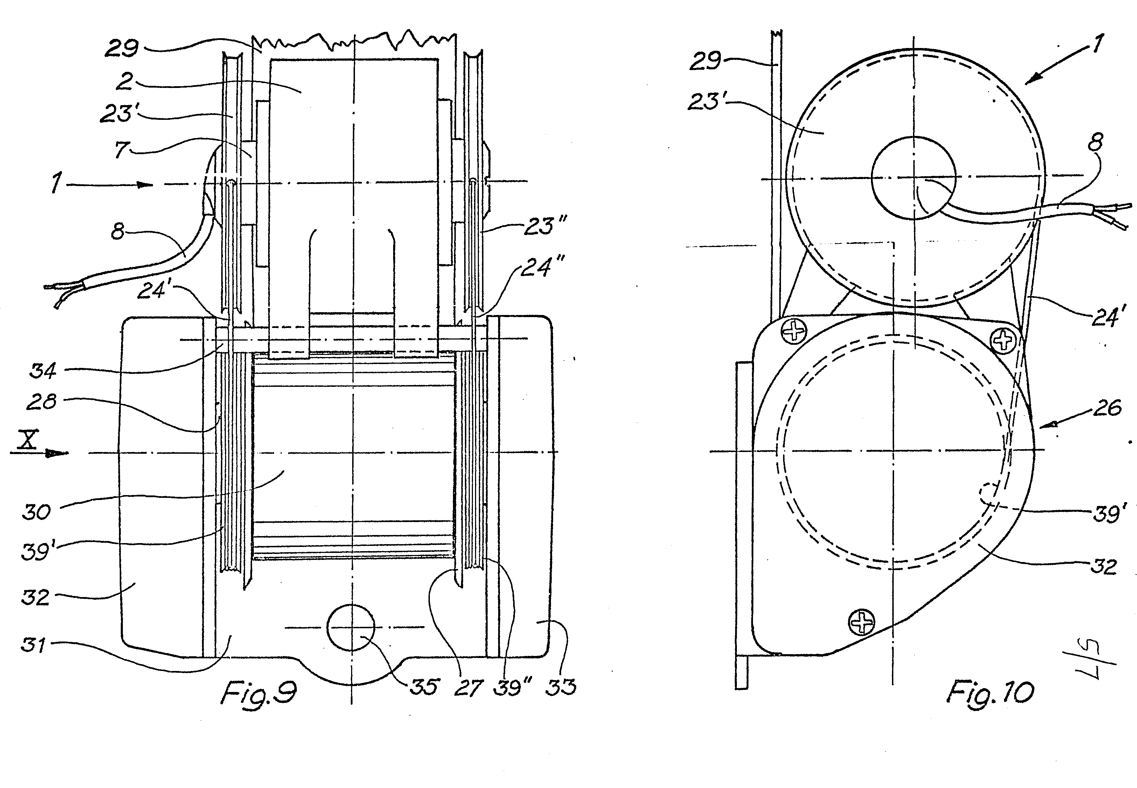

Bei der Ausführungsform nach Figur 9 und 10 der erfindungsgemäßen Aufwickelvorrichtung ist der Rückstrammer 1 wiederum achsparallel zur Gurtaufrollerwelle 28 oberhalb des Gurtaufrollautomaten 26 angeordnet. Dabei sind zwei fliegend gelagerte Antriebsscheiben 23' und 23" an der Welle 7 des Drehzylinders 2 des Drehkolbenmotors angeordnet. Weiterhin sind auf der Aufrollerwelle 28 beiderseits der Gurtbandspule 27 zwei Kupplungsscheiben 39' und 39" vorgesehen. Der Einsatz von zwei Antriebsscheiben 23', 23" erlaubt den Einsatz eines dünneren Drahtes 24', 24" bzw. die Realisierung einer größeren Antriebskraft bei gleichem Drahtdurchmesser. Diese Ausführungsform ist insbesondere dann sinnvoll, wenn eine erhöhte Antriebskraft benötigt wird, da sie aufgrund der Doppelausführung teurer ist und breiter baut.

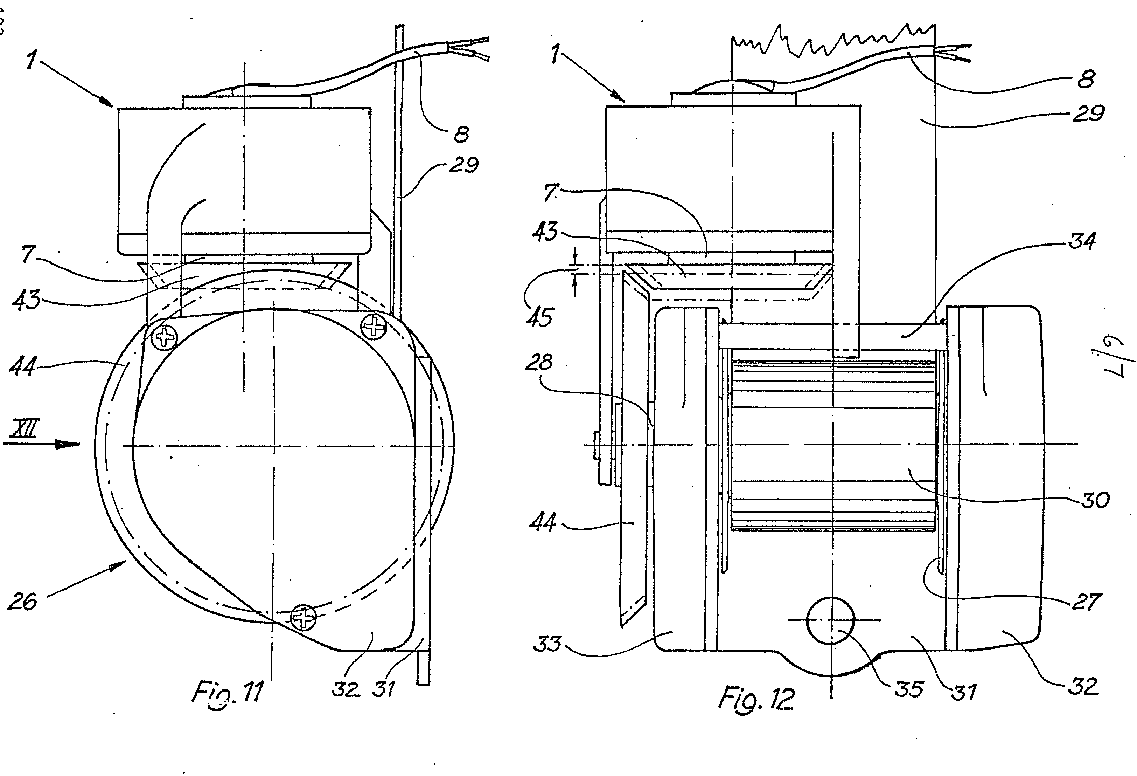

Die Ausführungsform nach Figur 11 und 12 der erfindungsgemäßen Gurtaufrollwickelvorrichtung unterscheidet sich von denjenigen Ausführungsformen nach Figur 2 bis 10 im wesentlichen dadurch, daß die Antriebsscheibe als Kegelrad 43 ausgebildet ist, und statt der Kupplungsscheibe auf die Aufrollerwelle 28 ein Kegelrad 44 aufgekeilt ist. Die Welle 7 des Drehkolbens 3 des Rückstrammers 1 erstreckt sich also senkrecht zur Rotationsachse der Aufrollerwelle 28, und zwar in vertikaler Richtung.

Zur Übertragung der Antriebsenergie der Welle 7 des Rückstrammers 1 auf die Aufrollerwelle 28 ist das Kegelrad 43 axial verschiebbar in der Welle 7 des Drehkolbens 3 angeordnet. Beim Zünden des Treibsatzes 5 wird dann das Kegelrad 43 um den Einrastweg 45 gemäß Figur 12 ausgefahren und mit dem auf der Aufrollerwelle 28 fest montierten Kegelrad 44 gekuppelt, indem die Zähne beider Kegelräder 43 und 44 in Eingriff gebracht werden.

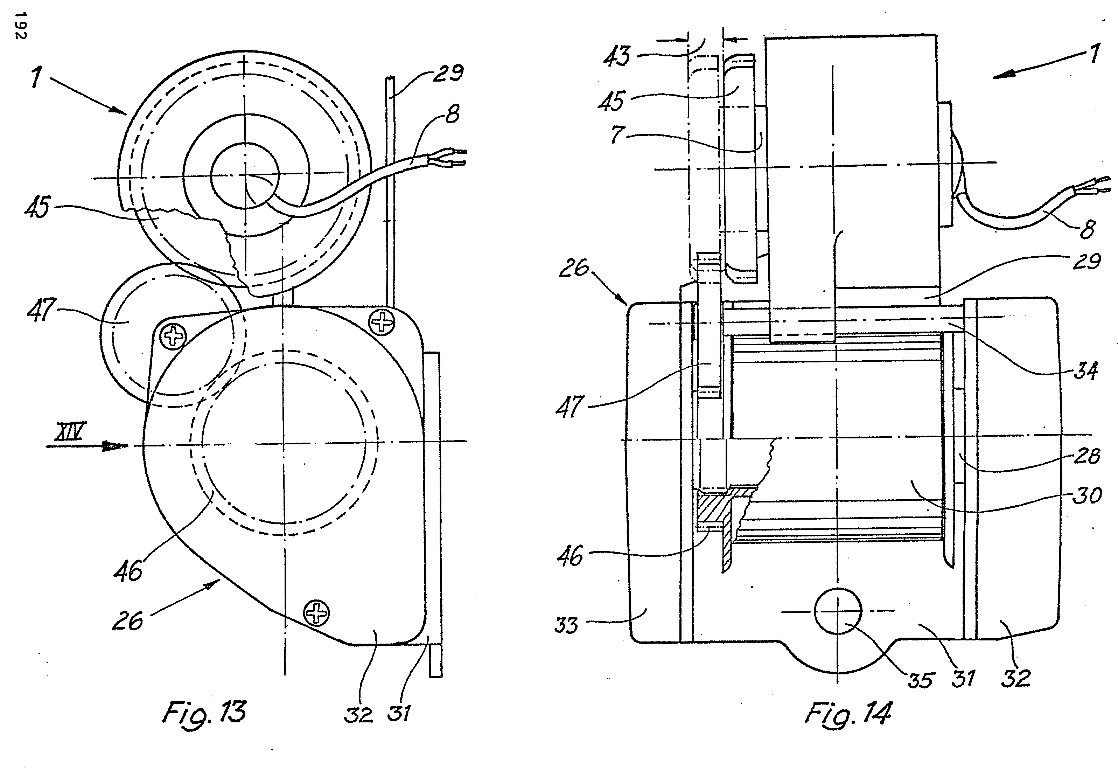

Die in Figur 13 und 14 dargestellte Ausführungsform der erfindungsgemäßen Aufwickelvorrichtung unterscheidet sich von derjenigen nach Figur 11 und 12 im wesentlichen dadurch, daß die Welle 7 des Rückstrammers 1 zur Aufrollerwelle 28 achsparallel angeordnet ist und die beiden Kegelräder durch die Zahnräder 45 und 46 gebildet sind. Die beiden Zahnräder 45 und 46 sind durch ein Getrieberad 47 miteinander verbunden. Das Getrieberad 47 kämmt ständig mit dem auf der Aufrollerwelle 28 fest montierten Zahnrad 46. Die Drehachse des Getrieberades 47 wird durch die Distanzstange 34 des Gurtaufrollautomaten 26 gebildet. Die Stirnverzahnung des an der Welle 7 des Rückstrammers 1 befestigten Zahnrades 45 ist auf der dem Getriebe 7 zugewandten Seite zur Erleichterung des Kuppelns angefast.

Wie der Zeichnung zu entnehmen, ist der Rotationsantriebsmotor des Rückstrammers 1 erfindungsgemäß vorzugsweise als separate Einheit außerhalb des Gurtaufrollautomaten angeordnet.

BAYERN - CHEMIE
Gesellschaft für flugchemische Antriebe mit
beschränkter Haftung
A s c h a u

Ottobrunn, 26.o4.82
9192
BTo1 Dr.Be/ch

**0093240**

## Aufwickelvorrichtung für Sicherheitsgurte

## Patentansprüche

1. Aufwickelvorrichtung für Sicherheitsgurte in Fahrzeugen, mit einem Gurtaufrollautomaten und einem Rückstrammer, der einen durch einen pyrotechnischen Treibsatz antreibbaren nach dem Drehkolbenprinzip arbeitenden Rotationsantriebsmotor mit mindestens einer mit der Aufrollerwelle des Gurtaufrollautomaten kuppelbaren Antriebsscheibe aufweist, dadurch g e k e n n z e i c h n e t , daß die Antriebsscheibe (23, 23', 23'') über ein Zugmittel (24, 40, 41) mit einer Kupplungsscheibe (39, 39', 39'') verbunden ist, die im Notfall mit der Gurtaufrollerwelle (28) kuppelbar ist.

2. Aufwickelvorrichtung nach Anspruch 1, dadurch g e - k e n n z e i c h n e t , daß das Zugmittel (24, 40) mit einem Ende an der Antriebsscheibe (23, 23', 23") befestigt ist und mit dem anderen Ende mindestens zweimal um die mit der Aufrollerwelle (28) kuppelbare Scheibe (39, 39', 39") gewickelt ist (Figur 3 bis 6 und Figur 9 und 10).

3. Aufwickelvorrichtung nach Anspruch 1 oder 2, dadurch g e k e n n z e i c h n e t , daß das Zugmittel (24) einen geringen Torsionswiderstand aufweist, die Rotationsachse (7) des Antriebsmotors des Rückstrammers (1) rechtwinklig zur Rotationsachse der Aufrollerwelle (28) des Gurtaufrollautomaten (26) verläuft und das Zugmittel (24) auf der Geraden verläuft, die durch den Schnitt der beiden Ebenen, in denen die Antriebswelle (7) bzw. die mit der Aufrollerwelle (28) kuppelbare Scheibe (39) liegt , gebildet wird (Figur 3 und 4).

4. Aufwickelvorrichtung nach Anspruch 1 oder 2, dadurch g e k e n n z e i c h n e t , daß die Rotationsachse (7) des Antriebsmotors des Rückstrammers (1) parallel zur Rotationsachse der Aufrollerwelle (28) verläuft und die Antriebsscheibe (23, 23', 23") und die mit der Aufrollerwelle (28) kuppelbare Scheibe (39, 39', 39") in einer Ebene liegen (Figur 5, 6; 9, 10).

5. Aufwickelvorrichtung nach Anspruch 4, dadurch g e - k e n n z e i c h n e t , daß das Zug- mittel ein Federbandstahl (40) ist.

6. Aufwickelvorrichtung nach Anspruch 4 oder 5, dadurch g e k e n n z e i c h n e t , daß der Antriebsmotor des Rückstrammers (1) zwei Antriebsscheiben (23', 23") aufweist und die daran befestigten Zugmittel
(24', 24") um zwei beiderseits der Gurtbandspule (27)
angeordnete , über je eine Mitnehmerkupplung mit der Aufrollerwelle (28) kuppelbare. Scheiben (39', 39") gewickelt
sind (Figur 9 und 10).

7. Aufwickelvorrichtung nach Anspruch 1, dadurch g e -
k e n n z e i c h n e t , daß das
Zugmittel        (41) endlos ausgebildet ist und die Antriebsscheibe (23)und die mit der Aufrollerwelle (28)
kuppelbare Scheibe (39) umschlingt (Figur 7 und 8).

8. Aufwickelvorrichtung nach Anspruch 7, dadurch g e -
k e n n z e i c h n e t , daß das endlose
Zugmittel        (41) durch eine Rollenkette, einen Zahnriemen oder einen Keilriemen gebildet ist und die Antriebsscheibe (23) sowie die mit der Aufrollerwelle (28)
kuppelbare Scheibe (39) eine entsprechende Verzahnung
bzw. ein entsprechendes Profil an ihrem Umfang aufweist.

9. Aufwickelvorrichtung nach Anspruch 7 oder 8, dadurch
g e k e n n z e i c h n e t , daß die mit der Aufrollerwelle (28) kuppelbare Scheibe (39) einen kleineren Durchmesser als die Antriebsscheibe (23) aufweist.

10. Aufwickelvorrichtung für Sicherheitsgurte in Fahrzeugen,
mit einem Gurtaufrollautomaten und einem Rückstrammer,
der einen durch einen pyrotechnischen Treibsatz antreibbaren nach dem Drehkolbenprinzip arbeitenden Rotationsantriebsmotor mit mindestens einer mit der Aufrollerwelle
des Gurtaufrollautomaten kuppelbaren Antriebsscheibe aufweist, dadurch g e k e n n z e i c h n e t , daß die Auf -
rollerwelle (28) drehfest mit einem Zahnrad (44, 46) ver-

-4-

bunden ist und die Antriebsscheibe als Zahnrad (43, 45) ausgebildet ist, das im Notfall mit dem Zahnrad (44, 46) der Aufrollerwelle (28) kuppelbar ist (Figur 11 bis 14).

11. Aufwickelvorrichtung nach Anspruch 10, dadurch  g e - k e n n z e i c h n e t  , daß die als Zahnrad (43, 45) ausgebildete Antriebsscheibe zur Kupplung mit dem Zahnrad (44, 46) der Aufrollerwelle (28) axial ausrückbar ist.

12. Aufwickelvorrichtung nach Anspruch 11, dadurch  g e - k e n n z e i c h n e t  , daß die Rotationsachse (7) des Antriebsmotors des Rückstrammers (1) und die Rotationsachse der Aufrollerwelle (28) des Gurtaufrollautomaten (26) parallel zueinander verlaufen, das Zahnrad (46) der Aufrollerwelle (28) mit einem Getrieberad (47) in Eingriff steht und die als Zahnrad (45) ausgebildete Antriebsscheibe beim Ausrücken in Eingriff mit dem Getrieberad (47) kommt (Figur 13 und 14).

13. Aufwickelvorrichtung nach Anspruch 12, dadurch  g e - k e n n z e i c h n e t  , daß das Zahnrad  (46) der Aufrollerwelle (28) einen kleineren Durchmesser aufweist als die als Zahnrad (45) ausgebildete Antriebsscheibe.

14. Aufwickelvorrichtung nach Anspruch 11, dadurch  g e - k e n n z e i c h n e t  , daß die Rotationsachse (7) des Antriebsmotors des Rückstrammers (1) senkrecht zur Rotationsachse der Aufrollerwelle (28) des Gurtaufrollautomaten (26) verläuft, und die als Zahnrad ausgebildete Antriebsscheibe und das Zahnrad der Aufrollerwelle (28) jeweils durch ein Kegelrad (43 bzw. 44) gebildet sind (Figur 11 und 12).

15. Aufwickelvorrichtung nach einem der vorstehenden An-
    sprüche, dadurch g e k e n n z e i c h n e t , daß
    der Rotationsantriebsmotor des Rotationsstrammers (1)
    oberhalb oder unterhalb des Gurtaufrollautomaten (26)
    befestigt ist.

16. Aufwickelvorrichtung nach Anspruch 15 mit einem Gurtaufrollautomaten, der eine oberhalb der Gurtbandspule
    verlaufende Distanzstange aufweist, dadurch g e  -
    k e n n z e i c h n e t , daß der Rotationsantriebs-
    motor des Rückstrammers (1) an der Distanzstange (34)
    befestigt ist.

17. Aufwickelvorrichtung nach einem der vorstehenden Ansprüche,
    dadurch g e k e n n z e i c h n e t , daß der Rotations-
    antriebsmotor von einem Drehkolbenmotor mit einem Dreh -
    zylinderraum (10) und einem Flügel (14) gebildet wird.

18. Aufwickelvorrichtung nach einem der vorstehenden Ansprüche,
    dadurch g e k e n n z e i c h n e t , daß der Rotations-
    antriebsmotor des Rotationsstrammers (1) als separate
    Einheit außerhalb des Gurtaufrollautomaten (26) angeordnet
    ist.

Fig. 1

Fig. 2

1/7

Fig. 3

Fig. 4

Fig.5

Fig.6

Fig.7

Fig.8

0093240

4/7

5/7

Fig.10

Fig.9

Fig. 11

Fig. 12

0093240

Fig. 13

Fig. 14

0093240